# EUROPÄISCHE PATENTSCHRIFT

(11) **EP 2 986 869 B1**
(45) Veröffentlichungstag und Bekanntmachung des Hinweises auf die Patenterteilung: **16.08.2017**
(21) Anmeldenummer: 14717452.8
(22) Anmeldetag: 14.04.2014
(51) Int. Cl.: F16G 13/16, H02G 3/04, H02G 9/12, H02G 11/00

(54) **ENERGIEFÜHRUNGSEINRICHTUNG**
ENERGY SUPPLY DEVICE
DISPOSITIF DE TRANSPORT D'ÉNERGIE

(30) Priorität: 16.04.2013 DE 202013101604 U
(43) Veröffentlichungstag der Anmeldung: 24.02.2016
(73) Patentinhaber: Igus GmbH, 51147 Köln (DE)
(72) Erfinder: HERMEY, Andreas, 53773 Hennef (DE); BARTEN, Dominik, 53340 Meckenheim (DE)
(74) Vertreter: Lippert Stachow Patentanwälte Rechtsanwälte
(86) Internationale Anmeldenummer: PCT/EP2014/057529
(87) Internationale Veröffentlichungsnummer: WO 2014/170272

(56) Entgegenhaltungen:
- EP-A1- 0 482 751
- EP-A2- 0 810 151
- WO-A1-01/29448
- DE-A1-102010 003 282
- DE-A1-102010 007 580
- DE-U1-202012 010 236

## Beschreibung

Die Erfindung betrifft eine Energieführungseinrichtung für Versorgungsleitungen, wie Kabel, Schläuche und sonstige Leitungen, insbesondere zur Versorgung von Maschinen im Offshore-Bereich, die unter Wasser eingesetzt werden, beispielsweise zur Versorgung von Bohrköpfen, die im Wesentlichen vertikal nach unten bohren.

Derartige Bohrungen werden beispielsweise vorgenommen, um Fundamente für Offshore-Windkraftanlagen zu schaffen. Zur Versorgung derartiger Bohrköpfe, die in Tiefen bis etwa zu 200 m arbeiten, werden bisher festummantelte Kabelbündel verwendet, die von einem Schiff oder einer Arbeitsplattform aus zum Meeresgrund hinab geführt werden. Diese bekannte Technik weist den Nachteil auf, dass bei Verwendung der ummantelten Kabelbündel keine Einzelleitungen ausgetauscht oder ergänzt werden können, um sie bei einem Defekt oder im Falle von Beschädigungen gegen andere Leitungen zu ersetzen oder durch zusätzliche Leitungen zu erweitern. Zudem bereitet auch bei sehr tiefen Bohrungen die Belastbarkeit der Leitungen Schwierigkeiten, da die Gefahr besteht, dass die auf die Leitungen wirkenden Zugspannungen die zulässigen Grenzwerte überschreiten.

Der Erfindung liegt daher die Aufgabe zugrunde, eine Energieführungseinrichtung für den Offshore-Bereich zu schaffen, die die bisher bestehenden Probleme beseitigt.

Erfindungsgemäß wird diese Aufgabe dadurch gelöst, dass die Energieführungseinrichtung als Energieführungskette ausgebildet ist, dass die Energieführungskette mindestens zwei Laststränge mit hintereinander angeordneten Laschen aufweist, dass die Laschen aus flexiblem, wasserbeständigem Material bestehen und mit ihren Nachbarlaschen über Kupplungselemente fest zu je einem Laststrang verbunden sind, dass durch die Laststränge hindurch mindestens je ein sich über die gesamte Länge der Energieführungskette erstreckendes zugfestes, wasserbeständiges Seil geführt ist, dass das Seil bzw. die Seile in der neutralen Faser der Laststränge verlaufen und in dieser Lage fixiert sind, dass die aus Laschen und Kupplungselementen gebildeten Laststränge durch in Abständen angeordnete Querstege miteinander verbunden sind und das die Querstege Halterungen zur Aufnahme der Versorgungsleitungen aufweisen.

Aufgrund der erfindungsgemäßen Konstruktion lassen sich die Versorgungsleitungen, die in den Halterungen der Querstege der Laststränge gelagert sind, beliebig austauschen, so dass defekte Leitungen ersetzt werden können und/oder bei Bedarf zusätzliche Leitungen oder Leitungen mit anderen Eigenschaften installiert werden können. Auch treten keine Schwierigkeiten mehr bei extrem großen Längen auf, da die Last im Wesentlichen von den durch die Laststränge hindurch- geführten Seilen aufgenommen werden, so dass die Versorgungsleitungen nicht übermäßig belastet sind. Aufgrund der Tatsache, dass die Seile in der neutralen Faser der Laststränge verlaufen und in dieser Lage fixiert sind, kann sich die Energieführungskette zumindest in eine Hauptebene frei nach beiden Seiten verbiegen.

Energieführungsketten sind an sich bekannt (DE 20 2012 010 236 U1, EP 0 482 751 A1). Derartige bekannte Energieführungsketten dienen zur Führung von Kabeln, Schläuchen oder dergleichen zwischen zwei relativ zueinander beweglichen Maschinenteilen. Solche bekannten Energieführungsketten eignen sich aber nicht für den Offshore-Bereich und zur Aufnahme von vertikalen Lasten, wie sie im Offshore-Bereich benötigt werden.

Bei der erfindungsgemäßen Energieführungseinrichtung, die von der Idee der Energieführungskette Gebrauch macht, können zumindest einige der an den Querstegen vorgesehenen Halterungen eine Zugentlastung für die Versorgungsleitungen aufweisen. Dadurch wird die Zugbelastung nahezu ausschließlich von den sich durch die Laststränge erstreckenden Seilen aufgenommen.

Zweckmäßig ist das flexible Material, aus dem die Laschen gefertigt sind, schlagfest, druckfest, sowie stoßdämpfend, so dass die Versorgungsleitungen selbst bei rauem Seebetrieb ausreichend geschützt sind.

Bei einer bevorzugten Ausführungsform der Erfindung weist das Material, aus dem die Laschen gefertigt sind, ein spezifisches Gewicht auf, welches leichter als das des Wassers ist. Durch eine solche Maßnahme erfährt die gesamte Energiekette einen gewissen Auftrieb, so dass sie leichter handhabbar ist und nur geringe Kräfte zum Einholen der Energieführungskette aufgebracht werden müssen.

Das Material, aus dem die Laschen gefertigt sind, kann ein geschlossenporiger Schaumstoff sein.

Alternativ kann das Material, aus dem die Laschen gefertigt sind, ein zumindest teilweise offenporiger Schaumstoff sein, wobei dann allerdings die aus diesem Material bestehenden Laschen mit einer wasserdichten Schutzschicht überzogen sein müssen, um einen Wassereintritt in den Schaumstoff zu verhindern.

Die Laschen sind vorzugsweise länglich ausgebildet - z.B. in der Größenordnung von 20 bis 150cm - und über ihre Länge mit mindestens einer Einschnürung versehen, um eine ausreichende Biegbarkeit zu gewährleisten.

Die Laschen weisen zweckmäßig einen im Wesentlichen rechteckigen Querschnitt auf, wobei die Einschnürungen als auf mindestens einer Seite der Laschen angeordnete Nuten ausgebildet sind, die parallel zu den die Laststränge miteinander verbindenden Querstegen angeordnet sind. Durch diese Maßnahme wird eine Hauptebene definiert, in der die Laschen gebogen werden können. Um eine gute Bringbarkeit in beide Richtungen der Hauptebene zu gewährleisten, sind die Nuten zweckmäßig auf gegenüberliegenden Seiten der Laschen ausgebildet.

Die die Laschen miteinander verbindenden Kupplungselemente bestehen vorzugsweise aus einem stabilen, starren Werkstoff, denn die Biegbarkeit der Energieführungskette erfolgt ausschließlich durch die Flexibilität der Laschen.

Die zur Halterung der Versorgungsleitungen dienenden Querstege sind dabei zweckmäßig zwischen den starren Kupplungselementen angeordnet, so dass eine stabile zuverlässige Aufnahme der Versorgungsleiten erfolgen kann.

Bei einer bevorzugten Ausführungsform der Erfindung besteht das sich durch die Laststränge hindurch erstreckende Seil aus seewasserbeständigem Kunststoff oder aus nichtrostendem Stahldraht, so dass nicht nur ausreichende Zugkräfte aufgenommen werden können, sondern auch ein dauerhafter Einsatz gewährleistet ist.

Diese vorteilhafte Eigenschaft gewährleistet, dass die Energieführungskette auf einer an Bord eines Schiffes oder einer Arbeitsplattform rotierbar gelagerten Trommel aufgewickelt werden kann.

Alternativ kann die Energieführungskette, da sie nach beiden Seiten verbiegbar ist, auch an einer an Bord eines Schiffes oder auf einer Arbeitsplattform angeordneten Aufhängevorrichtung nach Art von mehreren hintereinander gebildeten Schlaufen aufgehängt werden.

Die platzsparende Lagerung der Energieführungskette ist besonders deshalb wichtig, weil auf Schiffen und Arbeitsplattformen in der Regel ein absoluter Platzmangel herrscht.

Die erfindungsgemäße Energieführungseinrichtung ist nicht allein auf die Anwendung im Offshore-Bereich beschränkt. Die mit den erfindungsgemäßen Merkmalen versehene Energieführungskette kann überall dort eingesetzt werden, wo die Energieführungskette vorwiegend auf Zug beansprucht wird. Auch eignet sich die mit den erfindungsgemäßen Merkmalen versehene Energieführungskette für jeglichen rauen und mit Schmutz beaufschlagten Betrieb. Durch die Erfindung wird ein robustes System geschaffen, in welchem die Leitungen vor äußeren schädlichen Einwirkungen, insbesondere von Stößen und Schmutzeinwirkungen, geschützt werden. Darüber hinaus ist das erfindungsgemäße System leicht zu reinigen, da keine relativ zueinander beweglichen Teile, wie Gelenke, vorhanden sind. Das erfindungsgemäße System ist deshalb auch im Bergbau, im Tagebau, im Tunnelbau, im Schüttgutumschlag und dergleichen vorteilhaft einsetzbar.

Die Erfindung ist in der Zeichnung beispielhaft veranschaulicht und im Nachstehend im Einzelnen anhand der Zeichnung beschrieben. Es zeigen:
- Fig. 1:: eine perspektivische Ansicht eines Abschnitts aus einem ersten Ausführungsbeispiel einer Energieführungseinrichtung mit zwei Laststrängen in Explosionsdarstellung,
- Fig. 2:: eine Draufsicht auf die Anordnung gemäß Fig. 1,
- Fig. 3:: eine Seitenansicht in Richtung des Pfeils III aus Fig.2,
- Fig. 4:: eine Ansicht in Richtung des Pfeiles IV aus Fig. 2,
- Fig. 5:: eine perspektivische Ansicht eines Abschnitts einer zweiten Ausführungsform einer Energieführungseinrichtung mit drei Laststrängen in Explosionsdarstellung,
- Fig. 6:: eine Draufsicht auf die Energieführungseinrichtung gemäß Fig. 5,
- Fig. 7:: eine Seitenansicht in Richtung des Pfeiles VII aus Fig. 6 und
- Fig. 8:: eine Ansicht in Richtung des Pfeils VIII aus Fig. 6

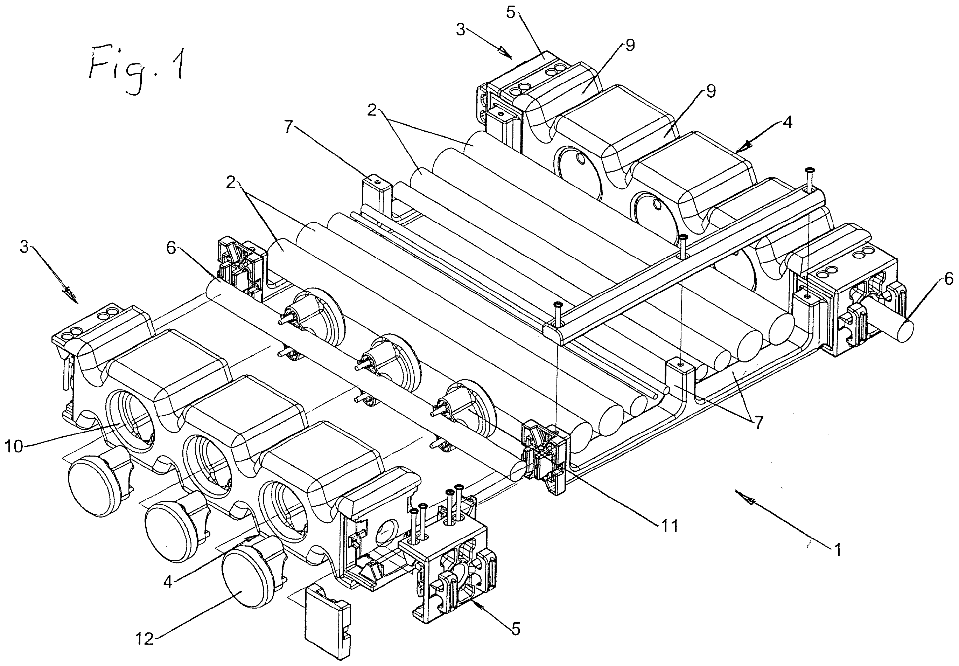

Gemäß Fig. 1 bis 4 der Zeichnung ist die erfindungsgemäße Energieführungseinrichtung als Energieführungskette 1 ausgebildet, die zur Aufnahme von verschiedenen Versorgungsleitungen 2, wie Kabeln, Schläuchen und sonstigen Leitungen, dient. Die in der Zeichnung dargestellte Energieführungskette 1 ist zur Versorgung von Bohrköpfen vorgesehen, die im Offshore-Bereich unter Wasser eingesetzt werden. Derartige Bohrköpfe arbeiten in einem Rohr, welches auf den Meeresgrund aufgesetzt ist. Der Bohrkopf wird darin versenkt und das Rohr folgt dem Bohrkopf in den Meeresgrund. Derartige Bohrungen werden insbesondere zur Herstellung Schaffung der Fundamente für Offshore-Windkrafträder durchgeführt. Die erfindungsgemäße Energieführungskette soll dazu dienen, die Versorgungsleitungen, die zum Betrieb des Bohrkopfes erforderlich sind, von einem Schiff oder einer Arbeitsplattform aus zu dem Bohrkopf zu führen.

Gemäß dem in Fig. 1 dargestellten Ausführungsbeispiel besteht die Energieführungskette 1 aus zwei Laststrängen 3, die die gesamte Last aufnehmen.

Die Laststränge 3 bestehen aus hintereinander angeordneten Laschen 4, die aus flexiblem, seewasserbeständigem Material gefertigt und mit den jeweiligen Nachbarlaschen über Kupplungselemente 5 fest zu je einem Laststrang 3 verbunden sind. Durch die Laststränge 3 ist je ein sich über die gesamte Länge der Energieführungskette erstreckendes zugfestes und seewasserbeständiges Seil 6 geführt, welches im Wesentlichen die Gesamtlast der Energieführungskette 1 trägt. Als Seile 6 können meerwasserbeständige Drahtseile oder Seile aus Kunststofffasern verwendet werden.

Die beiden Laststränge 3 sind durch eine Vielzahl von in Abständen angeordneten Querstegen 7 miteinander verbunden. Die Querstege 7 sind jeweils an gegenüberliegenden Kupplungselementen 5 befestigt, die die Laschen 4 eines Laststrangs 3 miteinander verbinden.

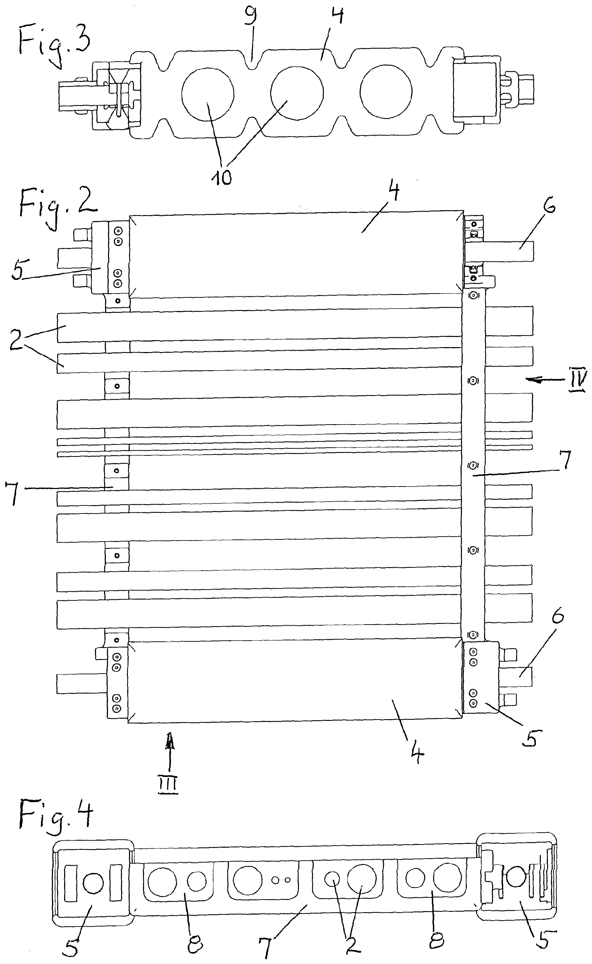

Wie insbesondere aus Fig. 4 hervorgeht, weisen die Querstege 7 Halterungen 8 zur Aufnahme der Versorgungsleitungen 2 auf.

Sämtliche der an den Querstegen 7 vorgesehenen Halterungen 8, oder zumindest einige der Halterungen 8, weisen eine Zugentlastung für die Versorgungsleitungen 2 auf, so dass die Versorgungsleitungen nicht oder nur geringfügig 2auf Zug beansprucht werden.

Das flexible Material, aus dem die Laschen 4 gefertigt sind, soll schlagfest, druckfest und stoßdämpfend sein. Darüber hinaus soll das Material der Laschen 4 ein spezifisches Gewicht aufweisen, welches leichter als Wasser ist, so dass die gesamte Energieführungskette 1 im Wasser einen gewissen Auftrieb erhält. Dadurch kann die Energieführungskette 1 relativ leicht und ohne großen Kraftaufwand zu dem jeweiligen Bohrkopf herabgelassen und wieder eingeholt werden.

Als Material für die Laschen eignet sich insbesondere Elastomere-Material, um eine gewisse Biegbarkeit zu gewährleisten. Das Elastomere-Material wird dabei zur Herstellung der Laschen 4 aufgeschäumt und als Weichschaum weiterverarbeitet. Damit die Laschen 4 kein Wasser aufnehmen, wird der Schaumstoff geschlossenporig hergestellt. Alternativ ist es auch möglich, den Schaumstoff zumindest teilweise offenporig zu verarbeiten, wobei dann allerdings die Laschen 4 mit einer Schutzschicht zur Abdichtung überzogen werden müssen.

Die Laschen 4 sind länglich ausgebildet und zwar weisen diese beispielsweise eine Länge von ca. 20 bis 150 cm auf. Die Laschen 4 haben einen im Wesentlichen rechteckigen Querschnitt. Um eine gute Biegbarkeit der Laschen 4 zu gewährleisten, sind die Laschen 4 über ihre Länge mit in Abständen angeordnete Nuten 9 versehen, und zwar auf gegenüberliegenden Seiten der Laschen 4, wobei die Nuten 9 parallel zu den die Laststränge 3 verbindenden Querstegen 7 angeordnet sind. Aufgrund dieser Konstruktion sind die Laschen 4 in ihrer Hauptebene nach beiden Seiten biegbar.

Die die Laschen 4 miteinander verbindenden Kupplungselemente 5 bestehen aus einem stabilen, starren Werkstoff, zumal die Kupplungselemente 5 nicht zur Biegbarkeit der Energieführungskette 1 beitragen müssen.

Das jeweilige Seil 6 ist in den Kupplungselementen 5 fest arretiert, so dass gewährleistet ist, dass die Seile 6 die Gesamtlast der Energieführungskette 1 einschließlich der Versorgungsleitungen 2 tragen.

Das Seil 6 erstreckt sich durch die gesamte Länge der jeweiligen Laschen 4 und wird nicht nur in den Kupplungselementen 5, sondern auch in den Laschen 6 genau in der neutralen Faser geführt. Um das Seil 6 in der jeweiligen Lasche 4 zu haltern, sind die Laschen 4 jeweils zwischen den Nuten 9 mit Querbohrungen 10 versehen, in die, wie insbesondere in Fig. 1 zu erkennen ist, Haltestücke 11 und 12 eingesetzt. Diese sind miteinander verbunden werden und fixieren das jeweilige Seil 6 genau in der neutralen Faser der Laststränge 3.

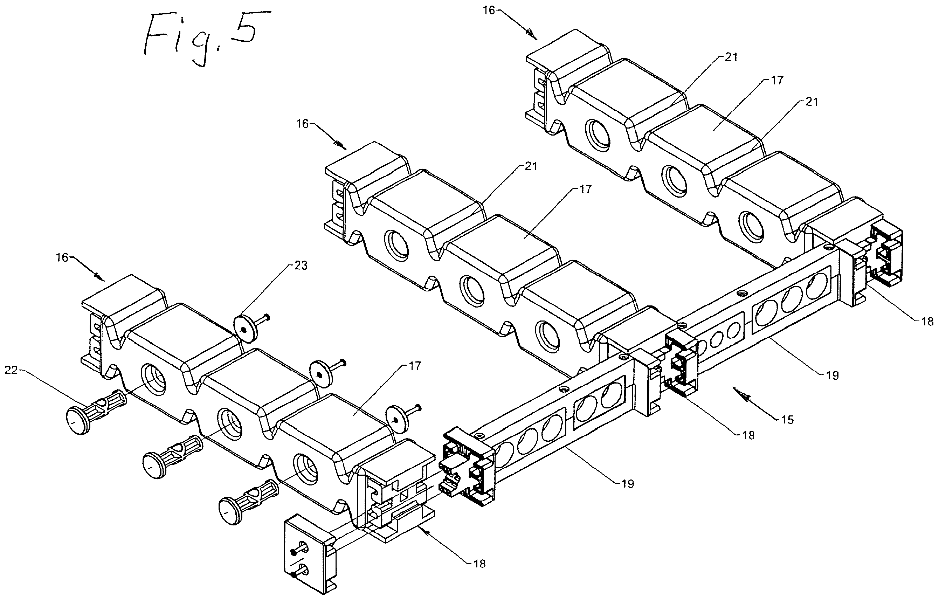

Bei dem in Fig. 5 bis 8 dargestellten Ausführungsbeispiel besteht die Energieführungskette 15 aus drei parallel verlaufenden Laststrängen 16. Die Laststränge 16 sind ebenso wie bei dem in Fig. 1 bis 4 dargestellten Ausführungsbeispiel aus biegbaren Laschen 17 zusammengesetzt, die jeweils über starre Kupplungselemente 18 miteinander verbunden sind.

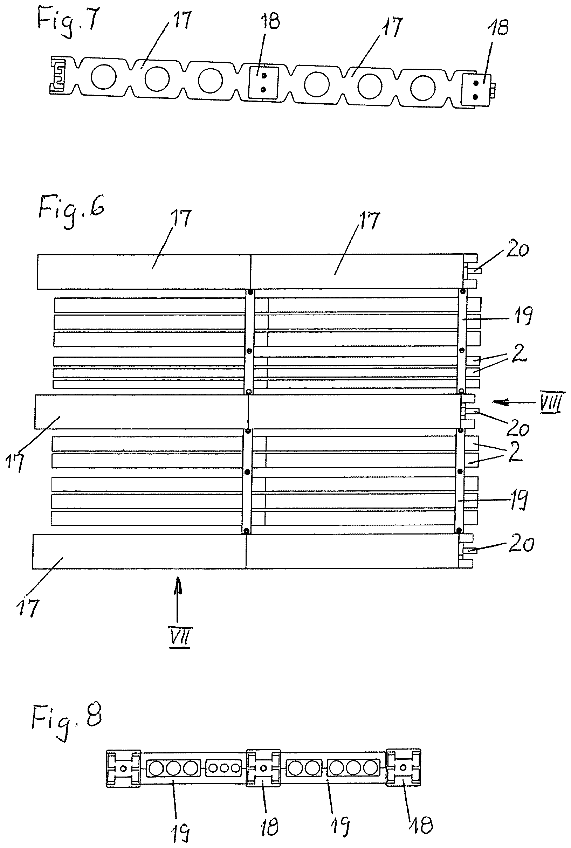

Zwischen den starren Kupplungselementen 18 der benachbarten Laststränge 16 sind Querstege 19 befestigt, die zur Aufnahme der in Fig. 6 dargestellten Versorgungsleitungen 2 dienen.

Durch die drei Laststränge 16 verlaufen ebenso wie bei dem in Figur 1 bis 4 dargestellten Ausführungsbeispiel Seile 20, die sich durch die gesamte Länge der Energieführungskette 15 erstrecken und in den Kupplungselementen 18 fest verankert sind. Dadurch wird die gesamte Last der Energieführungskette im Wesentlichen von den Seilen 20 aufgenommen, während die Versorgungsleitungen 2, die in den Querstegen 19 zumindest teilweise über Zugentlastungen gehalten sind, nicht oder nur geringfügig auf Zug belastet werden.

Auch bei diesem Ausführungsbeispiel sind die Laschen 17 mit auf ihren gegenüberliegenden Seiten ausgebildete Nuten 21 versehen, die parallel zu den Querstegen 19 verlaufen. Dadurch ist eine gute Biegbarkeit der Laschen 17 nach beiden Seiten gewährleistet.

Auch bei diesem Ausführungsbeispiel werden die drei Seile 6 nicht nur in den Kupplungselementen 18 fixiert, sondern sie werden auch innerhalb der Laschen 17 mittels Haltestücken 22 und 23 genau in der neutralen Faser der Laststränge 16 geführt.

Dieses Merkmal ist besonders deshalb wichtig, weil die Energieführungskette eine große Länge aufweisen muss, und zwar häufig bis zu 200 m und in Spezialfällen sogar darüber hinaus.

Da auf Schiffen oder an der Meeresoberfläche schwimmenden Arbeitsplattformen nur wenig Platz zur Verfügung steht, müssen die Energieführungsketten 1 bzw. 15 platzsparend gelagert werden können. Dazu eignen sich verschiedene Methoden. Einerseits können die Energieführungsketten 1 bzw. 15 an Bord des Schiffes bzw. auf der Arbeitsplattform auf einer rotierbar gelagerten Trommel aufgewickelt werden. Andererseits können an Bord des Schiffes bzw. auf der Arbeitsplattform Aufhängevorrichtungen vorgesehen sein, auf denen die Energieführungsketten 1 bzw. 15 in Form von mehreren hintereinander gebildeten Schlaufen aufgehängt werden können. Selbstverständlich sind auch andere Aufbewahrungsmöglichkeiten denkbar.

### Bezugszeichenliste

- 1: Energieführungskette
- 2: Versorgungsleitungen
- 3: Laststränge
- 4: Laschen
- 5: Kupplungselemente
- 6: Seile
- 7: Querstege
- 8: Halterungen
- 9: Nuten
- 10: Querbohrungen
- 11: Haltestücke
- 12: Haltestücke
- 15: Energieführungskette
- 16: Laststränge
- 17: Laschen
- 18: Kupplungselemente
- 19: Querstege
- 20: Seile
- 21: Nuten
- 22: Haltestücke
- 23: Haltestücke

## Patentansprüche

1. Energieführungseinrichtung für Versorgungsleitungen, wie Kabel, Schläuche und sonstige Leitungen, insbesondere zur Versorgung von Maschinen im Offshore-Bereich, die unter Wasser eingesetzt werden, beispielsweise zur Versorgung von Bohrköpfen, die im Wesentlichen vertikal nach unten bohren, **dadurch gekennzeichnet, dass** die Energieführungseinrichtung als Energieführungskette (1; 15) ausgebildet ist, dass die Energieführungskette (1; 15) mindestens zwei parallele Laststränge (3; 16) mit hintereinander angeordneten Laschen (4; 17) aufweist, dass die Laschen (4; 17) aus flexiblem, wasserbeständigem Material bestehen und mit ihren Nachbarlaschen über Kupplungselemente (5; 18) fest zu je einem Laststrang (3; 16) verbunden sind, dass durch die Laststränge (3; 16) hindurch mindestens je ein sich über die gesamte Länge der Energieführungskette (1; 15) erstreckendes zugfestes, wasserbeständiges Seil (6; 20) geführt ist, dass das Seil (6; 20) bzw. die Seile in der neutralen Faser der Laststränge (3; 16) verlaufen und in dieser Lage fixiert sind, dass die aus Laschen (4; 17) und Kupplungselementen (5;18) gebildeten Laststränge (3; 16) durch in Abständen angeordnete Querstege (7; 19) miteinander verbunden sind und dass die Querstege (7; 19) Halterungen (8) zur Aufnahme der Versorgungsleitungen (2) aufweisen.

2. Energieführungseinrichtung nach Anspruch 1, **dadurch gekennzeichnet, dass** zumindest einige der an den Querstegen (7; 19) vorgesehenen Halterungen (8) eine Zugentlastung für die Versorgungsleitungen (2) aufweisen.

3. Energieführungseinrichtung nach Anspruch 1 oder 2, **dadurch gekennzeichnet, dass** das flexible Material, aus dem die Laschen (4; 17) gefertigt sind, schlagfest, druckfest und stoßdämpfend ist.

4. Energieführungseinrichtung nach einem der Ansprüche 1 bis 3, **dadurch gekennzeichnet, dass** das Material, aus dem die Laschen (4; 17) gefertigt sind, ein spezifisches Gewicht aufweist, welches leichter als das des Wassers ist.

5. Energieführungseinrichtung nach Anspruch 3 oder 4, **dadurch gekennzeichnet, dass** das Material, aus dem die Laschen (4; 17) gefertigt sind, ein geschlossenporiger Schaumstoff ist.

6. Energieführungseinrichtung nach Anspruch 3 oder 4, **dadurch gekennzeichnet, dass** das Material aus dem die Laschen (4; 17) gefertigt sind, ein zumindest teilweise offenporiger Schaumstoff ist und dass die aus diesem Material bestehenden Laschen(4; 17) mit einer dichten Schutzschicht überzogen sind.

7. Energieführungseinrichtung nach einem der Ansprüche 1 bis 6, **dadurch gekennzeichnet, dass** die Laschen (4; 17) länglich ausgebildet und über ihre Länge mit mindestens einer Einschnürung versehen sind.

8. Energieführungseinrichtung nach Anspruch 7, **dadurch gekennzeichnet , dass** die Laschen (4; 17) einen im Wesentlichen rechteckigen Querschnitt aufweisen, dass die Einschnürungen als auf mindestens einer Seite der Laschen (4; 17) angeordnete Nuten (9; 21) ausgebildet sind und dass die Nuten (9; 21) parallel zu den die Laststränge (3; 16) miteinander verbindenden Querstege (7; 19) angeordnet sind.

9. Energieführungseinrichtung nach Anspruch 8, **dadurch gekennzeichnet , dass** die Nuten (9; 21) auf gegenüberliegenden Seiten der Laschen (4; 17) ausgebildet sind.

10. Energieführungseinrichtung nach einem der Ansprüche 1 bis 9, **dadurch gekennzeichnet, dass** die die Laschen (4; 17) verbindenden Kupplungselemente (5; 18) aus einem stabilen, starren Werkstoff gefertigt sind.

11. Energieführungseinrichtung nach Anspruch 10, **dadurch gekennzeichnet , dass** die zur Halterung der Versorgungsleitungen (2) dienenden Querstege (7; 19) zwischen den starren Kupplungselementen (5; 18) angeordnet sind.

12. Energieführungseinrichtung nach einem der Ansprüche 1 bis 11, **dadurch gekennzeichnet, dass** die sich durch die Laststränge (3; 16) hindurch erstreckenden Seile (6; 20) aus seewasserbeständigem Kunststoff oder aus nichtrostendem Stahldraht bestehen.

13. Energieführungseinrichtung nach einem der Ansprüche 1 bis 12, **dadurch gekennzeichnet, dass** die Energieführungskette (1; 15) auf einer an Bord eines Schiffes oder auf einer Arbeitsplattform rotierbar gelagerten Trommel aufwickelbar ist.

14. Energieführungseinrichtung nach einem der Ansprüche 1 bis 12, **dadurch gekennzeichnet, dass** die Energieführungskette (1; 15) an einer an Bord eines Schiffes oder auf einer Arbeitsplattform angeordneten Aufhängeeinrichtung nach Art von mehreren hintereinander gebildeten Schlaufen aufhängbar ist.

## Claims

1. Energy guiding device for supply lines, such as cables, hoses and other lines, particularly for supplying machines in the offshore sector that are used under water, e.g. for supplying drill heads that essentially drill vertically downwards, **characterised in that** the energy guiding device is designed as an energy guiding chain (1; 15), **in that** the energy guiding chain (1; 15) displays at least two parallel load strands (3; 16) with consecutively arranged straps (4; 17), **in that** the straps (4; 17) are made of flexible, water-resistant material and permanently connected to the adjacent straps via coupling elements (5; 18) to form a load strand (3; 16), **in that** at least one tension-resistant, water-resistant cable (6; 20), extending over the entire length of the energy guiding chain (1; 15), is guided through the load strands (3; 16), **in that** the cable (6; 20) or the cables lie in the neutral axis of the load strands (3; 16) and are fixed in this position, **in that** the load strands (3; 16) formed from straps (4; 17) and coupling elements (5; 18) are connected to each other by cross-members (7; 19) arranged at intervals, and **in that** the cross-members (7; 19) display holders (8) for receiving the supply lines (2).

2. Energy guiding device according to Claim 1, **charac**- **terised in that** at least some of the holders (8) provided on the cross-members (7; 19) display a strain relief for the supply lines (2).

3. Energy guiding device according to Claim 1 or 2, **char**- **acterised in that** the flexible material of which the straps (4; 17) are made is impact-resistant, compression-proof and shock-absorbing.

4. Energy guiding device according to one of Claims 1 to 3, **characterised in that** the material of which the straps (4; 17) are made has a specific gravity lighter than that of water.

5. Energy guiding device according to Claim 3 or 4, **char- acterised in that** the material of which the straps (4; 17) are made is a closed-cell foam.

6. Energy guiding device according to Claim 3 or 4, **char- acterised in that** the material of which the straps (4; 17) are made is an at least partially open-cell foam and in that the straps (4; 17) made of this material are coated with an impervious protective layer.

7. Energy guiding device according to one of Claims 1 to 6, characteri sed in that the straps (4; 17) are of oblong design and provided with at least one constriction over their length.

8. Energy guiding device according to Claim 7, **charac- terised** in that the straps (4; 17) display an essentially rectangular cross-section, in that the constrictions are designed as grooves (9; 21), located on at least one side of the straps (4; 17), and in that the grooves (9; 21) are arranged parallel to the cross-members (7; 19) connecting the load strands (3; 16) to each other.

9. Energy guiding device according to Claim 8, **characterised in that** the grooves (9; 21) are provided on opposite sides of the straps (4; 17).

10. Energy guiding device according to one of Claims 1 to 9, **characterised in that** the coupling elements (5; 18) connecting the straps (4; 17) are made of a stable, rigid material.

11. Energy guiding device according to Claim 10,**charac- terised in that** the cross-members (7; 19) serving to hold the supply lines (2) are located between the rigid coupling elements (5; 18).

12. Energy guiding device according to one of Claims 1 to 11, **characterised in that** the cables (6; 20) extending through the load strands (3; 16) are made of seawater-resistant plastic or of stainless steel wire.

13. Energy guiding device according to one of Claims 1 to 12, **characterised in that** the energy guiding chain (1; 15) can be wound up onto a rotating drum, installed on board a ship or on a working platform.

14. Energy guiding device according to one of Claims 1 to 12, **characterised in that** the energy guiding chain (1; 15) can be hung on a suspension device, located on board a ship or on a working platform, in the form of a series of loops formed one behind the other.

## Revendications

1. Dispositif de guidage d'énergie pour des conduits d'alimentation tels que câbles, tuyaux et d'autres conduits, en particulier pour l'alimentation des machines dans le secteur offshore installées sous l'eau, par exemple pour alimenter des têtes de forage forant sensiblement verticalement vers le bas,
**caractérisé en ce que** le dispositif de guidage d'énergie est réalisé sous forme de chaîne de guidage d'énergie (1; 15), que ladite chaîne de guidage d'énergie (1; 15) comporte au moins deux chaînes porte-charge (3; 16) parallèles avec des maillons (4; 17) disposés les uns derrière les autres, que les maillons (4; 17) consistent en un matériau flexible résistant à l'eau et sont reliés de manière fixe à leurs maillons adjacents par l'intermédiaire des éléments de couplage (5; 18), pour former une chaîne porte-charge (3; 16) respective, qu'au moins un câble (6; 20) respectif résistant à la traction et à l'eau et s'étendant sur toute la longueur de la chaîne de guidage d'énergie (1; 15) est guidé à travers des chaînes porte-charge (3; 16), que le câble (6; 20) ou les câbles s'étendent dans la fibre neutre des chaînes de porte-charge (3; 16) et sont fixés dans cette position, que les chaînes porte-charge (3; 16) formées des maillons (4;17) et des éléments de couplage (5; 18) sont interreliées par l'intermédiaire d'entretoises transversales (7; 19) disposées à intervalles, et que les entretoises transversales (7; 19) présentent des supports (8) pour loger les conduits d'alimentation (2).

2. Dispositif de guidage d'énergie selon la revendication 1, **caractérisé en ce qu'**au moins certains des supports (8) prévus aux entretoises transversales (7; 19) comportent une décharge de force de traction pour les conduits d'alimentation (2).

3. Dispositif de guidage d'énergie selon la revendication 1 ou 2, **caractérisé en ce que** le matériau flexible à partir duquel sont fabriqués les maillons (4; 17) est résistant au choc, à la pression et exerce une action d'amortissement.

4. Dispositif de guidage d'énergie selon l'une des revendications 1 à 3, **caractérisé en ce que** le matériau à partir duquel sont fabriqués les maillons (4; 17) présente un poids spécifique inférieur à celui de l'eau.

5. Dispositif de guidage d'énergie selon la revendication 3 ou 4, **caractérisé en ce que** le matériau à partir duquel sont fabriqués les maillons (4; 17) est une mousse à pores fermés.

6. Dispositif de guidage d'énergie selon la revendication 3 ou 4, **caractérisé en ce que** le matériau à partir duquel sont fabriqués les maillons (4; 17) est une mousse à pores ouverts au moins en partie et que les maillons (4: 17) consistant en ce matériau sont recouvertes d'une couche protectrice étanche.

7. Dispositif de guidage d'énergie selon l'une des revendications 1 à 6, **caractérisé en ce que** les maillons (4; 17) sont de forme allongée et sont munis, sur leur longueur, d'au moins un rétrécissement.

8. Dispositif de guidage d'énergie selon la revendication 7, **caractérisée en ce que** les maillons (4; 17) présentent une section sensiblement rectangulaire, que les rétrécissements sont réalisés sous forme de rainures (9; 21) disposées sur au moins un côté des maillons (4; 18) et que les rainures (9; 21) sont disposées de manière parallèle par rapport aux entretoises transversales (7; 19) interréliant lesdites chaînes porte-charge.

9. Dispositif de guidage d'énergie selon la revendication 8, **caractérisé en ce que** les rainures (9; 21) sont formées sur les côtés opposés des maillons (4; 17).

10. Dispositif de guidage d'énergie selon l'une des revendications 1 à 9, **caractérisé en ce que** les éléments de couplage (5; 19) interréliant les maillons (4; 17) sont fabriqués en un matériau stable et rigide.

11. Dispositif de guidage d'énergie selon la revendication 10, **caractérisé en ce que** les entretoises transversales (7; 19) servant de support des conduits d'alimentation (2) sont arrangées entre les éléments de couplage rigides (5; 18).

12. Dispositif de guidage d'énergie selon l'une des revendications 1 à 11, **caractérisé en ce que** les câbles (6; 20) s'étendant à travers des chaînes porte-charge (3; 16) consistent en une matière plastique résistante à l'eau de mer ou en fil d'acier inoxydable.

13. Dispositif de guidage d'énergie selon l'une des revendications 1 à 12, caractérisé e n c e que la chaîne de guidage d'énergie (1; 15) peut être enroulée sur un tambour supporté de manière rotative à bord d'un navire ou sur une plate-forme de travail.

14. Dispositif de guidage d'énergie selon l'une des revendications 1 à 12, **caractérisé en ce que** la chaîne de guidage d'énergie (1; 15) peut être suspendue à un dispositif de suspension en plusieurs boucles successives disposé à bord d'un navire ou sur une plate-forme de travail.
